(19) **Europäisches Patentamt / European Patent Office / Office européen des brevets**

(11) **EP 4 746 527 A1**

(12) **EUROPEAN PATENT APPLICATION**
published in accordance with Art. 153(4) EPC

(43) Date of publication:
**20.05.2026  Bulletin 2026/21**

(21) Application number: **24895902.5**

(22) Date of filing: **12.09.2024**

(51) International Patent Classification (IPC):
***H04W 48/16*** *(2009.01)*

(52) Cooperative Patent Classification (CPC):
**H04W 48/08; H04W 48/16; H04W 84/12**

(86) International application number:
**PCT/CN2024/118509**

(87) International publication number:
**WO 2025/112804 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.12.2023  CN 202311658146**

(71) Applicant: **Huawei Technologies Co., Ltd.
Shenzhen, Guangdong 518129 (CN)**

(72) Inventors:
- **CHEN, Wei**
  **Shenzhen, Guangdong 518129 (CN)**
- **LIU, Chang**
  **Shenzhen, Guangdong 518129 (CN)**
- **LIU, Juncai**
  **Shenzhen, Guangdong 518129 (CN)**
- **XU, Jiabin**
  **Shenzhen, Guangdong 518129 (CN)**
- **ZHONG, Rong**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **DATA PROCESSING METHOD AND RELATED DEVICE**

(57)    Embodiments of this application disclose a data processing method and a related device, which may be applied to a POI identification or service recommendation scenario. In the method, a terminal device obtains a point of information (point of information, POI) feature of a first area and a wireless fidelity (Wireless Fidelity, Wi-Fi) list; the terminal device sends, to a cloud device, a first request that carries a candidate POI and the Wi-Fi list; and the terminal device receives a target POI sent by the cloud device, where the target POI belongs to at least one candidate POI. Compared with a solution in which POI identification is entirely processed by cloud in a conventional technology, this application in which a terminal performs pre-identification, and then, cloud performs accurate identification can not only improve accuracy of POI identification, but also reduce computing load of the cloud. In addition, POI identification can be completed based on one round of Wi-Fi list scanning. Compared with the conventional technology in which multiple consecutive rounds of Wi-Fi scanning are performed, this application can reduce an overall identification delay.

FIG. 2

## Description

This application claims priority to Chinese Patent Application No. 202311658146.0, filed with the China National Intellectual Property Administration on December 1, 2023 and entitled "DATA PROCESSING METHOD AND RELATED DEVICE", which is incorporated herein by reference in its entirety.

## TECHNICAL FIELD

This application relates to the communication field, and in particular, to a data processing method and a related device.

## BACKGROUND

With development of mobile communications, smart mobile terminals and positioning services are increasingly popular. The positioning service can assign accurate time and space stamps to people, things, and events via corresponding positioning systems, sensor networks, an internet, communication networks, and other ubiquitous networks, and perform processing such as information fusion through dynamically obtaining location coordinates, location attributes, location relationships, location time features, and other multi-source heterogeneous information in real time, to build a location service map with a consistent semantic relationship and unified spatiotemporal geographic association, thereby playing an important role in public location services, government department decision-making, public opinion situation awareness, crowd behavior characteristic analysis, epidemic prediction, and the like.

Point of information (point of information, POI) search is a basic requirement of users in the mobile internet era, and has been integrated into every aspect of life, for example, daily transportation, travel, and catering. In a conventional technology, a POI identification procedure generally includes the following steps: After obtaining positioning information each time, a client requests POI data from a server, and the server performs matching based on a pre-built database to obtain the POI data, to complete the POI identification process.

However, in a scenario with heavy customer traffic, for example, a scenic spot or an entertainment place, due to a large quantity of clients, cloud computing load is high, and hardware costs of the server are increased.

## SUMMARY

Embodiments of this application provide a data processing method and a related device. A terminal performs pre-identification, and then cloud performs accurate identification, so that computing load of the cloud can be reduced.

A first aspect of this application provides a data processing method. The method may be applied to a POI identification or service recommendation scenario. The method may be performed by a terminal device, or the method may be performed by some components (for example, a processor, a chip, or a chip system) in a terminal device, or the method may be implemented by a logic module or software that can implement all or some functions of a terminal device. In the first aspect and the possible implementations of the first aspect, an example in which the method is performed by the terminal device is used for description. The method includes: obtaining a point of interest POI feature of a first area, where the POI feature includes a POI identifier, a first basic service set identifier (Basic Service Set Identifier, BSSID) corresponding to the POI identifier, and related information of the first BSSID; obtaining a wireless fidelity (Wireless Fidelity, Wi-Fi) list, where the Wi-Fi list includes at least one Wi-Fi, and each Wi-Fi in the at least one Wi-Fi includes a second BSSID of the Wi-Fi and strength; sending a first request to a cloud device, where the first request carries at least one candidate POI and the Wi-Fi list, and the at least one candidate POI is related to the POI feature and the Wi-Fi list; and receiving a target POI sent by the cloud device, where the target POI belongs to the at least one candidate POI.

In this embodiment of this application, compared with a solution in which POI identification is entirely processed by cloud in a conventional technology, this application in which a terminal performs pre-identification, and then, cloud performs accurate identification can not only improve accuracy of POI identification, but also reduce computing load of the cloud. In addition, POI identification can be completed based on one round of Wi-Fi list scanning. Compared with the conventional technology in which multiple consecutive rounds of Wi-Fi scanning are performed, this application can reduce an overall identification delay.

Optionally, in a possible implementation of the first aspect, that the at least one candidate POI is related to the POI feature and the Wi-Fi list includes: The at least one candidate POI is a POI that is in the POI feature and whose POI confidence is greater than or equal to a preset threshold, and the POI confidence indicates a degree of matching between the POI feature and the Wi-Fi list.

In this implementation, the at least one candidate POI in the POI feature may be determined based on a difference between a BSSID in the Wi-Fi list and a BSSID in the POI feature, or it is understood that the candidate POI is first determined based on strength comparison of the BSSIDs, so that a distance between the determined candidate POI and the terminal device falls within a specific range.

Optionally, in a possible implementation of the first aspect, the step of obtaining the point of interest POI feature includes: sending a second request to the cloud device, where the second request is used to request the POI feature of the first area; and receiving the POI feature sent by the cloud device.

In this implementation, the terminal device may obtain the POI feature through requesting from the cloud device. The cloud device has a large storage capacity, and can provide a more comprehensive POI feature for the request of the terminal device. In addition, obtaining the POI feature via the cloud device can reduce computational power consumption of the terminal device.

Optionally, in a possible implementation of the first aspect, the step of sending the first request to the cloud device includes: sending the first request to the cloud device if a preset condition is met, where the preset condition includes at least one of the following:

a movement distance of the terminal device is greater than or equal to a first threshold, where the movement distance is a distance between a location of the terminal device at which the terminal device sends a request to the cloud device last time and a current location of the terminal device;
a difference between the Wi-Fi list and a previously obtained Wi-Fi list is greater than or equal to a second threshold; and
a conclusion is obtained through neural network analysis, where the conclusion is sending the first request.

In this implementation, the preset condition for triggering the request is set, or it is understood that a plurality of interception mechanisms are set, to reduce an invalid request and reduce overall power consumption.

Optionally, in a possible implementation of the first aspect, the related information includes a statistical value of the first BSSID, the statistical value includes at least a maximum value and a minimum value, and the statistical value is used to measure strength information of the first BSSID.

In this implementation, the POI feature includes a statistical value related to strength of the first BSSID, so that more information can be provided for subsequent preliminary identification of the terminal device, and the candidate POI that better matches a current location of the terminal device can be determined based on the statistical value.

Optionally, in a possible implementation of the first aspect, the step further includes: recommending a related service based on the target POI. In this implementation, after the terminal device determines the target POI, a service related to the current location, for example, a package preference or a food recommendation may be recommended to the terminal device, to improve user experience.

Optionally, in a possible implementation of the first aspect, the step further includes: collecting at least one data packet, where each data packet in the at least one data packet includes Wi-Fi information collected by the terminal device in a movement process and/or information collected by the terminal device when the terminal device participates in onsite interaction behavior; and sending the at least one data packet to the cloud device, where the at least one data packet is used by the cloud device to generate a database, and the database is used to determine the target POI. A process of generating the database may be creating the database from scratch or updating the database. This is not specifically limited herein.

In this implementation, the terminal device may report, to the cloud device, the information collected in the movement process and/or the onsite interaction behavior process, so that the cloud device can generate or update the database based on the information reported by the terminal device. The database is built based on data collected by the terminal device in the movement process or the interaction behavior process instead of adding specific professional collection personnel to collect data on site. In this way, Wi-Fi training can be automatically completed. In addition, new stores or stores that have just closed can be detected in time.

A second aspect of this application provides a resource configuration method. The method may be applied to a POI identification or service recommendation scenario. The method may be performed by a cloud device, or the method may be performed by some components (for example, a processor, a chip, or a chip system) in a cloud device, or the method may be implemented by a logic module or software that can implement all or some functions of a cloud device. In the second aspect and the possible implementations of the second aspect, an example in which the method is performed by the cloud device is used for description. In the method, the cloud device receives a first request from a terminal device, where the first request carries at least one candidate POI and a Wi-Fi list, the Wi-Fi list includes at least one Wi-Fi, and each Wi-Fi in the at least one Wi-Fi includes a second BSSID of the Wi-Fi and strength. The cloud device sends a target POI to the terminal device, where the target POI is related to a database, the at least one candidate POI, and the Wi-Fi list, the database stores POI information and a POI fingerprint, and each POI fingerprint includes at least one Wi-Fi fingerprint.

In this embodiment of this application, compared with a solution in which POI identification is entirely processed by cloud in a conventional technology, this application in which a terminal performs pre-identification, and then, cloud performs accurate identification can not only improve accuracy of POI identification, but also reduce computing load of the cloud. In addition, POI identification can be completed based on one round of Wi-Fi list scanning. Compared with the conventional technology in which multiple consecutive rounds of Wi-Fi scanning are performed, this application can reduce an overall identification delay.

Optionally, in a possible implementation of the second aspect, before the step of receiving the first request from the terminal device, the method further includes: obtaining the database, where the POI information includes a POI identifier and geographic information, the POI information further includes at least one of a name and a POI type, the at least one Wi-Fi fingerprint includes at least one Wi-Fi, and each Wi-Fi in the at least one Wi-Fi includes a BSSID of the Wi-Fi and strength.

In this implementation, the cloud device first obtains the database that stores the POI information and the Wi-Fi fingerprint, to facilitate subsequent POI identification in cooperation with the terminal device.

Optionally, in a possible implementation of the second aspect, the step of obtaining the database includes: receiving at least one data packet reported by at least one terminal device, where each data packet in the at least one data packet includes Wi-Fi information collected by a corresponding terminal device in a movement process and/or information collected by the terminal device when the terminal device participates in onsite interaction behavior; aggregating at least two data packets to obtain at least two temporary POIs; and associating the at least two temporary POIs with a POI library to obtain the database, where the POI library includes at least two POI identifiers and basic information corresponding to the at least two POI identifiers.

In this implementation, the cloud device may receive the information that is collected in the movement process and/or the onsite interaction behavior process and that is reported by the terminal device, to generate or update the database based on the information reported by the terminal device. The database is built based on data collected by the terminal device in the movement process or the interaction behavior process instead of adding specific professional collection personnel to collect data on site. In this way, Wi-Fi training can be automatically completed. In addition, new stores or stores that have just closed can be detected in time.

Optionally, in a possible implementation of the second aspect, the step further includes: extracting a feature library from the database, where the feature library includes a BSSID whose parameter is greater than a threshold in each POI, a corresponding statistical value, and geographic information of each POI, the parameter includes a frequency and/or strength, the feature library is used to provide a POI feature for the terminal device, and the POI feature is related to the at least one candidate POI.

In this implementation, the BSSID whose parameter is greater than the threshold may be first extracted from the full database for the terminal device, to provide a reference for the terminal device to determine the candidate POI, thereby improving accuracy of a preliminary identification result of the terminal device.

Optionally, in a possible implementation of the second aspect, before the step of receiving the first request from the terminal device, the method further includes: receiving a second request from the terminal device, where the second request is used to request a POI feature of a first area, and the POI feature includes a POI identifier, a first basic service set identifier BSSID corresponding to the POI identifier, and related information of the first BSSID; determining the POI feature in the feature library based on the first area; and sending the POI feature to the terminal device.

In this implementation, the cloud device may provide a corresponding POI feature based on a request sent by the terminal device. The cloud device has a large storage capacity, and can provide a more comprehensive POI feature for the request of the terminal device. In addition, obtaining the POI feature via the cloud device can reduce computational power consumption of the terminal device.

Optionally, in a possible implementation of the second aspect, that the target POI is related to the database, the at least one candidate POI, and the Wi-Fi list includes: The database is used to determine a Wi-Fi fingerprint related to the at least one candidate POI, and a similarity between the Wi-Fi fingerprint and the Wi-Fi list is related to the target POI.

In this implementation, the Wi-Fi fingerprint related to the candidate POI is determined based on the database, and then, the target POI is determined based on the similarity between the Wi-Fi list scanned by the terminal device and the Wi-Fi fingerprint. POI identification can be completed based on one round of Wi-Fi list scanning. Compared with the conventional technology in which multiple consecutive rounds of Wi-Fi scanning are performed, this application can reduce an overall identification delay.

A third aspect of embodiments of this application provides a terminal device. The terminal device may be used in a POI identification or service recommendation scenario. The terminal device includes: an obtaining unit, configured to obtain a point of interest POI feature of a first area, where the POI feature includes a POI identifier, a first basic service set identifier BSSID corresponding to the POI identifier, and related information of the first BSSID, the obtaining unit is further configured to obtain a wireless fidelity Wi-Fi list, the Wi-Fi list includes at least one Wi-Fi, and each Wi-Fi in the at least one Wi-Fi includes a second BSSID of the Wi-Fi and strength; and a transceiver unit, configured to send a first request to a cloud device, where the first request carries at least one candidate POI and the Wi-Fi list, and the at least one candidate POI is related to the POI feature and the Wi-Fi list. The transceiver unit is further configured to receive a target POI sent by the cloud device, where the target POI belongs to the at least one candidate POI.

Optionally, in a possible implementation of the third aspect, that the at least one candidate POI is related to the POI feature and the Wi-Fi list includes: The at least one candidate POI is a POI that is in the POI feature and whose POI confidence is greater than or equal to a preset threshold, and the POI confidence indicates a degree of matching between the POI feature and the Wi-Fi list.

Optionally, in a possible implementation of the third aspect, the obtaining unit is specifically configured to send a second request to the cloud device, where the second request is used to request the POI feature of the first area. The obtaining unit is specifically configured to receive the POI feature sent by the cloud device.

Optionally, in a possible implementation of the third aspect, the obtaining unit is specifically configured to send the first request to the cloud device if a preset condition is met, where the preset condition includes at least one of the following:

a movement distance of the terminal device is greater than or equal to a first threshold, where the movement distance is a distance between a location of the terminal device at which the terminal device sends a request to the cloud device last time and a current location of the terminal device;
a difference between the Wi-Fi list and a previously obtained Wi-Fi list is greater than or equal to a second threshold; and
a conclusion is obtained through neural network analysis, where the conclusion is sending the first request.

Optionally, in a possible implementation of the third aspect, the related information includes a statistical value of the first BSSID, the statistical value includes at least a maximum value and a minimum value, and the statistical value is used to measure strength information of the first BSSID.

Optionally, in a possible implementation of the third aspect, the terminal device further includes a recommendation unit, configured to recommend a related service based on the target POI.

Optionally, in a possible implementation of the third aspect, the terminal device further includes a collection unit, configured to collect at least one data packet, where each data packet in the at least one data packet includes Wi-Fi information collected by the terminal device in a movement process and/or information collected by the terminal device when the terminal device participates in onsite interaction behavior. The transceiver unit is further configured to send the at least one data packet to the cloud device, where the at least one data packet is used by the cloud device to generate a database, and the database is used to determine the target POI.

A fourth aspect of embodiments of this application provides a terminal device. The terminal device may be used in a POI identification or service recommendation scenario. The terminal device includes a transceiver unit, configured to receive a first request from a terminal device, where the first request carries at least one candidate POI and a Wi-Fi list, the Wi-Fi list includes at least one Wi-Fi, and each Wi-Fi in the at least one Wi-Fi includes a second BSSID of the Wi-Fi and strength. The transceiver unit is further configured to send a target POI to the terminal device, where the target POI is related to a database, the at least one candidate POI, and the Wi-Fi list, the database stores POI information and a POI fingerprint, and each POI fingerprint includes at least one Wi-Fi fingerprint.

Optionally, in a possible implementation of the fourth aspect, the cloud device further includes an obtaining unit, configured to obtain the database, where the POI information includes a POI identifier and geographic information, the POI information further includes at least one of a name and a POI type, the at least one Wi-Fi fingerprint includes at least one Wi-Fi, and each Wi-Fi in the at least one Wi-Fi includes a BSSID of the Wi-Fi and strength.

Optionally, in a possible implementation of the fourth aspect, the obtaining unit is specifically configured to receive at least one data packet reported by at least one terminal device, where each data packet in the at least one data packet includes Wi-Fi information collected by a corresponding terminal device in a movement process and/or information collected by the terminal device when the terminal device participates in onsite interaction behavior. The obtaining unit is specifically configured to aggregate at least two data packets to obtain at least two temporary POIs. The obtaining unit is specifically configured to associate the at least two temporary POIs with a POI library to obtain the database, where the POI library includes at least two POI identifiers and basic information corresponding to the at least two POI identifiers.

Optionally, in a possible implementation of the fourth aspect, the cloud device further includes an extraction unit, configured to extract a feature library from the database, where the feature library includes a BSSID whose parameter is greater than a threshold in each POI, a corresponding statistical value, and geographic information of each POI, the parameter includes a frequency and/or strength, the feature library is used to provide a POI feature for the terminal device, and the POI feature is related to the at least one candidate POI.

Optionally, in a possible implementation of the fourth aspect, the transceiver unit is further configured to receive a second request from the terminal device, where the second request is used to request a POI feature of a first area, and the POI feature includes a POI identifier, a first basic service set identifier BSSID corresponding to the POI identifier, and related information of the first BSSID. The transceiver unit is further configured to determine the POI feature in the feature library based on the first area. The transceiver unit is further configured to send the POI feature to the terminal device.

Optionally, in a possible implementation of the fourth aspect, that the target POI is related to the database, the at least one candidate POI, and the Wi-Fi list includes: The database is used to determine a Wi-Fi fingerprint related to the at least one candidate POI, and a similarity between the Wi-Fi fingerprint and the Wi-Fi list is related to the target POI.

A fifth aspect of this application provides a terminal device, including at least one processor. The at least one processor is coupled to a memory. The memory is configured to store a program or instructions. The at least one processor is configured to execute the program or the instructions, so that the terminal device implements the method in any one of the possible implementations of the first aspect.

A sixth aspect of this application provides a cloud device, including at least one processor. The at least one processor is coupled to a memory. The memory is configured to store a program or instructions. The at least one processor is configured to execute the program or the instructions, so that the cloud device implements the method in any one of the possible implementations of the second aspect.

A seventh aspect of this application provides a terminal device, including at least one logic circuit and an input/output interface. The logic circuit is configured to perform the method in any one of the possible implementations of the first aspect.

An eighth aspect of this application provides a cloud device, including at least one logic circuit and an input/output interface. The logic circuit is configured to perform the method in any one of the possible implementations of the second aspect.

A ninth aspect of this application provides a communication system. The communication system includes the terminal device in any one of the possible implementations of the fifth aspect and the cloud device in any one of the possible implementations of the sixth aspect, or includes the terminal device in any one of the possible implementations of the seventh aspect and the cloud device in any one of the possible implementations of the eighth aspect.

A tenth aspect of this application provides a computer-readable storage medium. The storage medium is configured to store one or more computer-executable instructions. When the computer-executable instructions are executed by a processor, the processor performs the method in any one of the possible implementations of the first aspect or the second aspect.

An eleventh aspect of this application provides a computer program product (or referred to as a computer program). When a computer program in the computer program product is executed by a processor, the processor performs the method in any one of the possible implementations of the first aspect or the second aspect.

A twelfth aspect of this application provides a chip system. The chip system includes at least one processor, configured to support a terminal device/cloud device in implementing the method in any one of the possible implementations of the first aspect or the second aspect.

In a possible design, the chip system may further include a memory. The memory is configured to store program instructions and data that are necessary for the terminal device/cloud device. The chip system may include a chip, or may include a chip and another discrete component. Optionally, the chip system further includes an interface circuit, and the interface circuit provides program instructions and/or data for the at least one processor.

For technical effect brought by any one of the designs of the third aspect to the twelfth aspect, refer to the technical effect brought by different designs of the first aspect and the second aspect. Details are not described herein.

## BRIEF DESCRIPTION OF DRAWINGS

FIG. 1 is a diagram of a structure of a communication system according to an embodiment of this application;
FIG. 2 is a schematic flowchart of a data processing method according to an embodiment of this application;
FIG. 3 is another schematic flowchart of a data processing method according to an embodiment of this application;
FIG. 4 is another schematic flowchart of a data processing method according to an embodiment of this application;
FIG. 5 is a diagram of a structure of a terminal device according to an embodiment of this application;
FIG. 6 is a diagram of a structure of a cloud device according to an embodiment of this application;
FIG. 7 is a diagram of another structure of a terminal device according to an embodiment of this application; and
FIG. 8 is a diagram of another structure of a cloud device according to an embodiment of this application.

## DESCRIPTION OF EMBODIMENTS

For ease of understanding, the following first describes related terms and concepts mainly used in embodiments of this application.

1. Point of interest (point of interest, POI)

A POI, as an important part of an electronic navigation map, is generally a landmark, a building, a scenic spot, or the like on the electronic map, and is used to mark a government department, commercial organizations (a gas station, a department store, a supermarket, a restaurant, a hotel, a convenience store, a hospital, or the like) in various industries, scenic spots (a park, a public toilet, or the like), historic and cultural sites, transportation facilities (various stations, parking lots, speeding cameras, and speed limit signs), or the like represented by this location.

POI search is a basic requirement of users in the mobile internet era, and has been integrated into every aspect of life, for example, daily transportation, travel, and catering. In a conventional technology, there are two POI identification manners.

A solution, namely an indoor positioning-based solution, is to perform indoor map-based POI matching after a longitude and a latitude are obtained. However, this method depends on an indoor map with POI annotations, and is unavailable in most scenarios. In addition, this method has a very high requirement on accuracy of indoor positioning and POIs of the indoor map. Accuracy of POI matching based on the longitude and the latitude directly affects user experience of a final location service.

Another solution is to identify, based on a wireless fidelity (Wireless Fidelity, Wi-Fi) fingerprint, a POI at which a user is currently located. A client intermittently scans a surrounding Wi-Fi (initiated by a system or an application), and a Wi-Fi list (that is, a Wi-Fi fingerprint) obtained through scanning may be used as a basis for identifying a current location. After obtaining positioning information each time, the client requests POI data from a server, and the server performs matching based on a pre-built database to obtain the POI data, to complete a POI identification process.

However, in a scenario with heavy customer traffic, for example, a scenic spot or an entertainment place, due to a large quantity of clients, cloud computing load is high, and hardware costs of the server are increased.

To resolve the foregoing technical problem, an embodiment of this application provides a data processing method. Compared with a solution in which POI identification is entirely processed by cloud in a conventional technology, this application in which a terminal performs pre-identification, and then, cloud performs accurate identification can not only improve accuracy of POI identification, but also reduce computing load of the cloud.

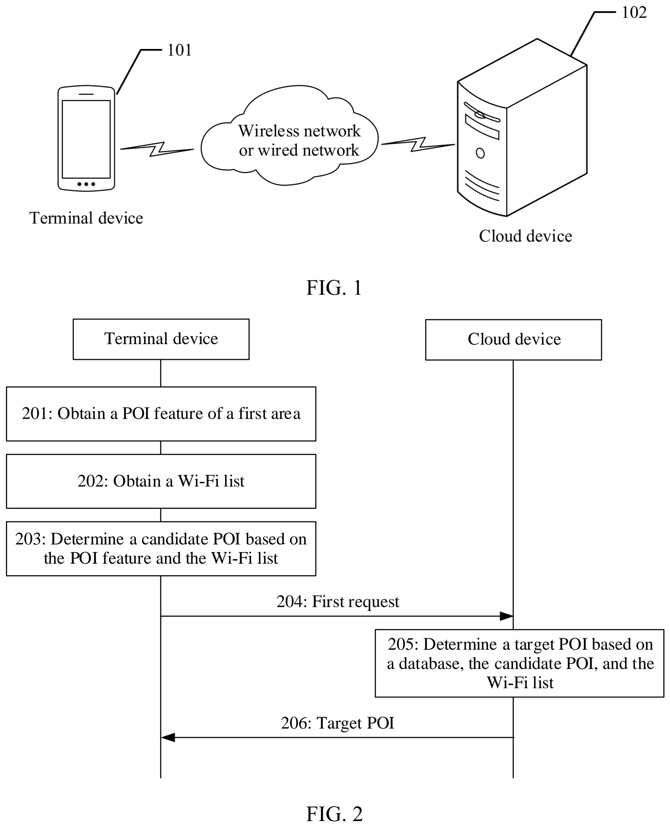

FIG. 1 is a diagram of a communication system according to an embodiment of this application. The communication system includes a terminal device 101 and a cloud device 102. The terminal device 101 may be connected to the cloud device 102 through a wired network or a wireless network.

The terminal device 101 may be a terminal used by a user, and the terminal device 101 is configured to provide a service for the user. The user may operate the terminal device 101 through an operation like a voice/touch gesture. In a process in which the user uses the terminal device 101, the terminal device 101 supports providing a service for the user independently; or may support joint processing with another device (for example, another device like the cloud device 102), to provide a service for the user.

Optionally, the terminal device 101 may be equipped with an operating system, and an application is loaded through an operation of the user. The terminal device 101 may support at least one of the following functions: installing an application, invoking a cloud service (for example, public cloud or private cloud), and internally building a service.

The cloud device 102 has a data processing (for example, storage, search, or identification) function. The cloud device 102 may receive a data processing request from the terminal device 101, process data to obtain a processing result, and return the processing result to the terminal device 101, so that the terminal device 101 can present the processing result to the user.

In a POI identification scenario, the terminal device 101 may first perform preliminary POI identification to obtain a candidate POI. The terminal device 101 sends a POI identification request to the cloud device 102, where the POI identification request carries at least the candidate POI. In this way, the cloud device 102 can perform accurate POI identification based on a database and the candidate POI obtained through preliminary identification of the terminal device 101 to obtain a target POI, and send the target POI to the terminal device 101. Further, the terminal device 101 can present the target POI to the user, or recommend a related service to the user based on the target POI, for example, a merchant discount coupon, sign recommendation, and member card application. Compared with a solution in the conventional technology in which POI identification is entirely processed by cloud, in the communication system, a terminal first performs preliminary identification, and then, cloud performs accurate identification. Because the cloud device 102 performs accurate identification based on the candidate POI identified by the terminal device 101, accuracy of POI identification can be improved, and computing load of the cloud can be reduced.

In embodiments of this application, the terminal device 101 may be a terminal device like a mobile phone, a tablet computer (pad), a portable game console, a personal digital assistant (personal digital assistant, PDA), a notebook computer, an ultra mobile personal computer (ultra mobile personal computer, UMPC), a handheld computer, a netbook, a vehicle-mounted media player, a wearable electronic device, a virtual reality (virtual reality, VR) terminal device, an augmented reality (augmented reality, AR) terminal device, a vehicle, a vehicle-mounted terminal, an aircraft terminal, or a smart robot.

In embodiments of this application, the cloud device 102 may be a device or server that has a data processing function, for example, a cloud server, a network server, an application server, or a management server. The cloud device 102 receives the data processing request from the terminal device through an interaction interface, and then performs data processing via a memory that stores data and a processor that processes data. The memory in the cloud device 102 may be a general name, and includes a local storage and a database that stores historical data. The database may be on the cloud device, or may be on another network server.

In addition, the data processing method and the related device provided in embodiments of this application may be applied to a plurality of application scenarios. Several common scenarios are as follows:

1. Map navigation: POI information is collected, so that a destination can be easily found in a navigation mode like driving, walking, or public transport.
2. Travel: POI information such as scenic spots, restaurants, or accommodation is searched for, to plan a travel route and search for tourism resources.
3. Business service: POI information such as stores, supermarkets, and hotels is searched for, to provide the business services and a convenient service.
4. Geographic analysis: A business district, transportation, and the like of an area are analyzed based on POI information, to provide services such as business data, transportation analysis, and city planning.

It may be understood that the foregoing several application scenarios are merely examples, and there may be another application scenario in actual application. This is not specifically limited herein.

The following describes the data processing method in embodiments of this application. The method may be performed by a data processing device, or may be performed by a component (for example, a processor, a chip, or a chip system) of a data processing device. The data processing device may be a cloud device, or may be a terminal device, or may be performed by a system including a cloud device and a terminal device (as shown in FIG. 1).

The method provided in embodiments of this application is mainly applicable to scenarios such as POI identification.

FIG. 2 is a schematic flowchart of a data processing method according to an embodiment of this application. The method may include step 201 to step 206. The following describes step 201 to step 206 in detail.

Step 201: A terminal device obtains a POI feature of a first area.

The terminal device obtains the POI feature of the first area, where the POI feature includes a first basic service set identifier (Basic Service Set Identifier, BSSID) and related information of the first BSSID. The related information of the first BSSID includes a statistical value of the first BSSID, where the statistical value is used to measure strength information of the first BSSID, the statistical value includes at least a maximum value and a minimum value, and the statistical value may further include at least one of the following: a variance, a mean value, and the like. It may be understood that there may be one or more first BSSIDs.

A BSSID in this embodiment of this application may also be understood as a medium access control (Media Access Control Address, MAC) address of an access point (Access Point, AP), and is used to identify a basic service set (Basic Service Set, BSS) of the AP. A manner of representing the BSSID is not specifically limited herein. For example, the BSSID may be represented by a hexadecimal character string, or may be represented by a binary character string.

In this embodiment of this application, the terminal device obtains the POI feature in a plurality of manners. The POI feature may be selected from a local database, or may be sent by another device (for example, a cloud device). This is not specifically limited herein.

In a possible implementation, the terminal device selects the POI feature of the first area from the local database. The local database includes a BSSID whose parameter is greater than a threshold in each POI and a corresponding statistical value, and the parameter includes a frequency and/or strength.

The local database may also be referred to as a feature library, and may be pre-stored by the terminal device or delivered by the cloud device. This is not specifically limited herein.

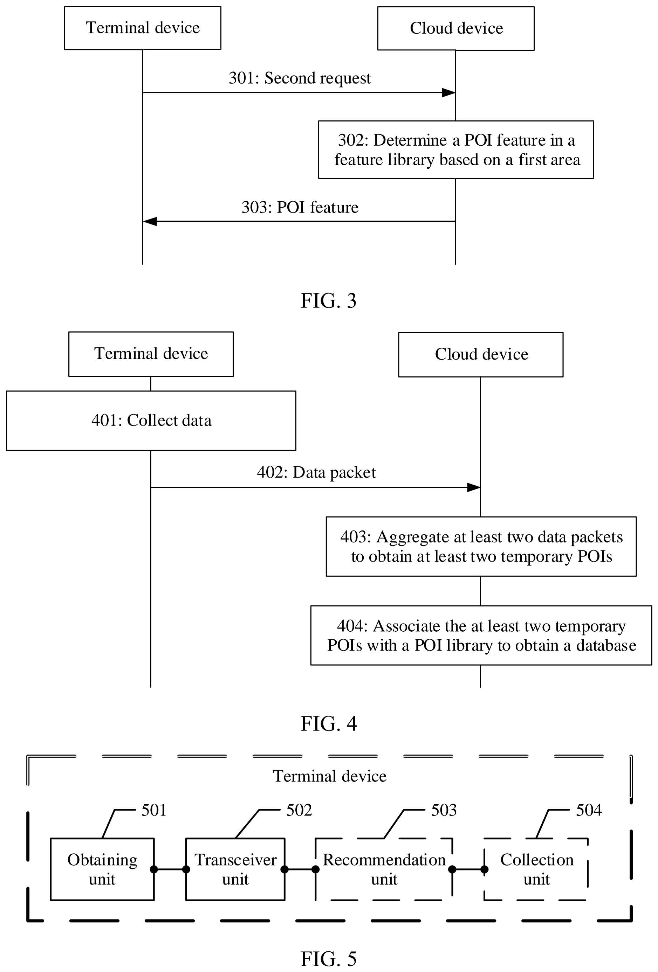

In another possible implementation, the terminal device obtains the POI feature of the first area in a manner of receiving the POI feature sent by the cloud device. An obtaining procedure in this case may be shown in FIG. 3. The following describes an embodiment shown in FIG. 3. Details are not described herein.

The first area in this embodiment of this application is used to represent a geographical area, and a granularity of the area may be an administrative region (for example, an autonomous prefecture, a county, an autonomous county, a city, or a municipal district), a street area, a geographical grid (for example, a five-digit Geohash), a specific area (for example, a shopping mall, an office building, an airport, an entertainment facility, or a hospital), or the like. In addition, the first area is an area in which the terminal device is used as a dot and a preset distance is used as a radius, or an area in which the terminal device is used as a midpoint and a preset distance is used as a side length. This is not specifically limited herein. In addition, a physical shape of the first area may be a polygon, a circle, or the like. This is not specifically limited herein.

For example, for ease of description, a POI identifier is represented by a store name, and a statistical value includes a minimum value and a maximum value. The first BSSID is replaced with a sequence. The sequence may be specifically FC:83:C6:00:F0:E7 or the like. For example, a first sequence and a second sequence are two different first BSSIDs.

Table 1 shows an example of the POI feature of the first area.

Table 1

| POI identifier (for example, a store name) | First BSSID and statistical value of the POI identifier Unit: decibel relative to one milliwatt (dBm) | First BSSID and statistical value of the POI identifier Unit: decibel relative to one milliwatt (dBm) | First BSSID and statistical value of the POI identifier Unit: decibel relative to one milliwatt (dBm) | First BSSID and statistical value of the POI identifier Unit: decibel relative to one milliwatt (dBm) |
|---|---|---|---|---|
| Store A | First sequence: - 70, -40 | Second sequence: -80, -50 | Third sequence: -90, -60 | - |
| Store B | Second sequence: -70, -40 | First sequence: - 80, -50 | Third sequence: -80, -50 | Fourth sequence: -90, -60 |
| Store C | Third sequence: - 70, -40 | Second sequence: -80, -50 | Fourth sequence: -80, -50 | First sequence: -90, -60 |
| Store D | Fourth sequence: -70, -40 | Third sequence: - 80, -50 | Second sequence: -90, - 60 | - |

The first sequence, the second sequence, the third sequence, and the fourth sequence are merely used to distinguish between different BSSIDs. It is assumed that the first area relates to four POIs: the store A, the store B, the store C, and the store D. In addition, the store A has three first BSSIDs (namely, the first sequence, the second sequence, and the third sequence), the store B has four first BSSIDs (namely, the first sequence, the second sequence, the third sequence, and the fourth sequence), the store C has four first BSSIDs (namely, the first sequence, the second sequence, the third sequence, and the fourth sequence), and the store D has three first BSSIDs (namely, the fourth sequence, the third sequence, and the second sequence).

Step 202: The terminal device obtains a Wi-Fi list.

The terminal device obtains the Wi-Fi list, where the Wi-Fi list includes at least one Wi-Fi, and each Wi-Fi in the at least one Wi-Fi includes a second BSSID of the Wi-Fi and strength.

In this embodiment of this application, the terminal device obtains the Wi-Fi list in a plurality of manners. The Wi-Fi list may be obtained by scanning a surrounding Wi-Fi signal via a Wi-Fi module of the terminal device, or may be sent by another device (for example, another terminal device). This is not specifically limited herein.

For example, similar to that in the foregoing example, for ease of description, the BSSID is replaced with a sequence. The sequence may be specifically FC:83:C6:00:F0:E7 or the like. For example, a first sequence and a second sequence are two different BSSIDs.

It is assumed that a Wi-Fi list obtained by the terminal device through scanning at a current location is shown in Table 2.

Table 2

| Second BSSID | Strength: decibel relative to one milliwatt (dBm) |
|---|---|
| First sequence | -40 |
| Second sequence | -60 |
| Third sequence | -70 |
| Fourth sequence | -85 |

In a possible implementation, the terminal device scans a surrounding available Wi-Fi signal to obtain a Wi-Fi list.

For example, the terminal device is a mobile phone. The mobile phone may scan a surrounding Wi-Fi signal via a Wi-Fi module of the mobile phone to obtain a Wi-Fi list.

In another possible implementation, the terminal device sends a scanning request to another device, and after obtaining a Wi-Fi list through scanning, the another device feeds back the Wi-Fi list to the terminal device.

For example, the terminal device is a smartwatch, and another device is a mobile phone. The mobile phone may scan a surrounding Wi-Fi signal via a Wi-Fi module of the mobile phone to obtain a Wi-Fi list, and send the Wi-Fi list to the smartwatch, so that the smartwatch obtains the Wi-Fi list.

Step 203: The terminal device determines a candidate POI based on the POI feature and the Wi-Fi list.

After obtaining the POI feature and the Wi-Fi list, the terminal device may determine the candidate POI based on the POI feature and the Wi-Fi list. Alternatively, it is understood that the candidate POI is related to the POI feature and the Wi-Fi list. There may be one or more candidate POIs. This is not specifically limited herein.

This step may also be understood as pre-identification, coarse identification, or preliminary identification of the POI.

The terminal device determines the candidate POI based on respective statistical values of different first BSSIDs in the POI feature and the strength of the second BSSID.

Optionally, determining the candidate POI based on the respective statistical values of the different first BSSIDs in the POI feature and the strength of the second BSSID includes: determining POI confidence based on a difference between each second BSSID in the Wi-Fi list and the related information of the first BSSID in the POI feature; and determining, as the candidate POI, a POI identifier corresponding to POI confidence greater than a preset threshold. Alternatively, it is understood that, that the candidate POI is related to the POI feature and the Wi-Fi list includes: The candidate POI is a POI whose POI confidence is greater than or equal to the preset threshold in the POI feature, and the POI confidence indicates a degree of matching between the POI feature and the Wi-Fi list.

Further, a first difference between a maximum strength value and a minimum strength value that correspond to each first BSSID is first calculated, then, a second difference between strength of each second BSSID in the Wi-Fi list and a minimum strength value of the corresponding first BSSID is calculated, and a ratio of the first difference to the second difference is calculated. POI confidence of each POI is determined based on ratios corresponding to all the first BSSIDs in the POI, and then, the candidate POI is determined based on the POI confidence and the preset threshold.

For example, the POI confidence indicates the degree of matching between the POI feature and the Wi-Fi list, and may be specifically represented in Formula 1. In other words, the POI confidence is calculated according to Formula 1:

$$\text{Formula 1:} \quad POI \text{ confidence} = \frac{1}{N} \sum_{1}^{N} \frac{rssi_j - \min Rssi_j}{\max Rssi_j - \min Rssi_j}, j = 1, 2, \ldots, N.$$

$rssi_j = clamp(\min Rssi_j, \max Rssi_j)$.

N represents a quantity of first BSSIDs corresponding to one POI (or referred to as a store), $j$ represents any first BSSID, $\min Rssi_j$ represents a minimum strength value of a $j^{th}$ first BSSID in a POI feature corresponding to the store, $\max Rssi_j$ represents a maximum strength value of a $j^{th}$ first BSSID in the POI, and $rssi_j$ represents strength of a second BSSID in a Wi-Fi list corresponding to the $j^{th}$ first BSSID. For example, in the example in Table 1, N of the store A is 3, N of the store B is 4, N of the store C is 4, and N of the store D is 3. $clamp(\min Rssi_j, \max Rssi_j)$ is used to limit a value range of $rssi_j$ between $\min Rssi_j$ and $\max Rssi_j$.

It may be understood that the foregoing method for calculating the POI confidence through average distribution is merely an example. In actual application, another manner may be used, for example, Gaussian distribution. This is not specifically limited herein.

For example, the examples in Table 1 and Table 2 are still used. The terminal device may determine the following cases based on the POI feature: For the store A, a maximum value of the first sequence is -40, a minimum value of the first sequence is -70, a maximum value of the second sequence is -50, a minimum value of the second sequence is -80, a maximum value of the third sequence is -60, and a minimum value of the third sequence is -90.

For the store B, a maximum value of the second sequence is -40, a minimum value of the second sequence is -70, a maximum value of the first sequence is -50, a minimum value of the first sequence is -80, a maximum value of the third sequence is -50, a minimum value of the third sequence is -80, a maximum value of the fourth sequence is -60, and a minimum value of the fourth sequence is -90.

For the store C, a maximum value of the third sequence is -40, a minimum value of the third sequence is -70, a maximum value of the second sequence is -50, a minimum value of the second sequence is -80, a maximum value of the fourth sequence is -50, a minimum value of the fourth sequence is -80, a maximum value of the first sequence is -60, and a minimum value of the first sequence is -90.

For the store D, a maximum value of the fourth sequence is -40, a minimum value of the fourth sequence is -70, a maximum value of the third sequence is -50, a minimum value of the third sequence is -80, a maximum value of the second sequence is -60, and a minimum value of the second sequence is -90.

Due to a limitation of $clamp(\min Rssi_j, \max Rssi_j)$ on each of the following items, it is equivalent to that a value of each item in the following calculation formula is constrained to a range from 0 to 1. During calculation, the value in Table 2 needs to be adjusted to a range from a maximum value to a minimum value.

For POI confidence of the store B, because strength of the first sequence of a second item is -40, the strength of the first sequence of the second item may be adjusted to a range (from -50 to -80) based on clamp. Generally, a value closest to the maximum value and the minimum value is selected. It is equivalent to replacing -40 with -50. Similarly, for a third item in POI confidence of the store C, -85 is replaced with -80. Similarly, for a first item in POI confidence of the store D, -85 is replaced with -70.

The POI confidence of the stores is calculated as follows:

$$POI \text{ confidence (store } A) = \frac{1}{N}\sum\nolimits_{j}^{N}\frac{rssi_{j} - \min Rssi_{j}}{\max Rssi_{j} - \min Rssi_{j}} = \frac{1}{3}\sum\nolimits_{1}^{3}\frac{rssi_{Aj} - \min Rssi_{j}}{\max Rssi_{Aj} - \min Rssi_{j}}$$

$$= \frac{1}{3}\left(\frac{-40 - (-70)}{-40 - (-70)} + \frac{-60 - (-80)}{-50 - (-80)} + \frac{-70 - (-90)}{-60 - (-90)}\right)$$

$$= \frac{1}{3}\left(1 + \frac{2}{3} + \frac{2}{3}\right) \approx 0.78$$

$$POI \text{ confidence (store } B) = \frac{1}{N}\sum\nolimits_{j}^{N}\frac{rssi_{j} - \min Rssi_{j}}{\max Rssi_{j} - \min Rssi_{j}} = \frac{1}{4}\sum\nolimits_{1}^{4}\frac{rssi_{j} - \min Rssi_{j}}{\max Rssi_{j} - \min Rssi_{j}}$$

$$= \frac{1}{4}\left(\frac{-60 - (-70)}{-40 - (-70)} + \frac{-50 - (-80)}{-50 - (-80)} + \frac{-70 - (-80)}{-50 - (-80)} + \frac{-85 - (-90)}{-60 - (-90)}\right)$$

$$= \frac{1}{4}\left(\frac{1}{3} + 1 + \frac{1}{3} + \frac{1}{6}\right) \approx 0.46$$

$$POI \text{ confidence (store } C) = \frac{1}{N}\sum\nolimits_{j}^{N}\frac{rssi_{j} - \min Rssi_{j}}{\max Rssi_{j} - \min Rssi_{j}} = \frac{1}{4}\sum\nolimits_{1}^{4}\frac{rssi_{j} - \min Rssi_{j}}{\max Rssi_{j} - \min Rssi_{j}}$$

$$= \frac{1}{4}\left(\frac{-70 - (-70)}{-40 - (-70)} + \frac{-60 - (-80)}{-50 - (-80)} + \frac{-80 - (-80)}{-50 - (-80)} + \frac{-60 - (-90)}{-60 - (-90)}\right)$$

$$= \frac{1}{4}\left(0 + \frac{2}{3} + 0 + 1\right) \approx 0.42$$

$$POI \text{ confidence (store } D) = \frac{1}{N}\sum\nolimits_{j}^{N}\frac{rssi_{j} - \min Rssi_{j}}{\max Rssi_{j} - \min Rssi_{j}} = \frac{1}{3}\sum\nolimits_{1}^{3}\frac{rssi_{j} - \min Rssi_{j}}{\max Rssi_{j} - \min Rssi_{j}}$$

$$= \frac{1}{3}\left(\frac{-70 - (-70)}{-40 - (-70)} + \frac{-70 - (-80)}{-50 - (-80)} + \frac{-60 - (-90)}{-60 - (-90)}\right)$$

$$= \frac{1}{3}\left(0 + \frac{1}{3} + 1\right) \approx 0.44$$

It is assumed that the preset threshold is 0.43. In this case, it is determined that candidate POIs greater than 0.43 include the store A, the store B, and the store D.

It may be understood that the preset threshold may be set based on an actual requirement. This is not specifically limited herein.

Step 204: The terminal device sends a first request to the cloud device.

After determining the candidate POI, the terminal device sends the first request to the cloud device. Correspondingly, the cloud device receives the first request sent by the terminal device. The first request carries at least one candidate POI and the Wi-Fi list, and the at least one candidate POI is related to the POI feature and the Wi-Fi list.

Step 205: The cloud device determines a target POI based on the database, the candidate POI, and the Wi-Fi list.

The cloud device stores the database, and the database stores POI information and at least one Wi-Fi fingerprint. The POI information includes a POI identifier. The at least one Wi-Fi fingerprint includes at least one Wi-Fi, and each Wi-Fi in the at least one Wi-Fi includes a BSSID of the Wi-Fi and strength.

This step may also be understood as accurate identification or fine identification of the POI.

Optionally, the POI information further includes at least one of the following: a POI name, geographic information (for example, a longitude, a latitude, and an address) of the POI, a POI type, and the like.

In this embodiment of this application, the POI type may be set based on an actual requirement, and may specifically include at least one of the following: catering, scenic spot, public facility, enterprise, shopping, transportation facility service, financial insurance service, science, education, and culture service, business building, life service, sports and leisure service, healthcare service, government agency, social organization, accommodation service, and other categories.

After receiving the first request, the cloud device determines the target POI based on the database, the candidate POI, and the Wi-Fi list. That the target POI is related to the database, the at least one candidate POI, and the Wi-Fi list includes: The database is used to determine a Wi-Fi fingerprint related to the at least one candidate POI, and a similarity between the Wi-Fi fingerprint and the Wi-Fi list is related to the target POI.

For example, it is assumed that POI fingerprints shown in Table 3 are found in the database for candidate POIs:

Table 3

| Candidate POI name | POI identifier | POI address | POI category | POI fingerprint |
|---|---|---|---|---|
| Store A | 01 | Street a, county C, city B, province A | Catering | Wi-Fi fingerprint 1 and Wi-Fi fingerprint 2 |
| Store B | 02 | Street h, County T, City W, Province D | Catering | Wi-Fi fingerprint 3, Wi-Fi fingerprint 4, and Wi-Fi fingerprint 5 |
| Store D | 03 | Street a, County R, City C, Province F | Library | Wi-Fi fingerprint 6 and Wi-Fi fingerprint 7 |

Each POI fingerprint may include one or more Wi-Fi fingerprints. For example, in Table 3, the POI fingerprint of the store A includes two Wi-Fi fingerprints, the POI fingerprint of the store B includes three Wi-Fi fingerprints, and the POI fingerprint of the store D includes two Wi-Fi fingerprints. Each Wi-Fi fingerprint includes a plurality of Wi-Fis, and each Wi-Fi includes a BSSID of the Wi-Fi and strength of the BSSID.

Optionally, determining the target POI based on the database, the candidate POI, and the Wi-Fi list includes: first obtaining a POI fingerprint (each POI fingerprint includes one or more Wi-Fi fingerprints) related to the candidate POI in the database, and calculating a similarity between the Wi-Fi list and each Wi-Fi fingerprint in each POI fingerprint. For a POI fingerprint, a POI may be obtained based on similarities of Wi-Fi fingerprints in the POI fingerprint (for example, the similarities of the Wi-Fi fingerprints in the POI fingerprint are added to obtain a similarity of the POI fingerprint), to determine, as the target POI, a POI that corresponds to the POI fingerprint and that meets a preset condition. A process of obtaining the Wi-Fi fingerprint may be understood as follows: A search range is first determined based on a candidate set, and then, the target POI is determined according to an algorithm like weighted k-nearest neighbor (weighted k-nearest neighbor, WKNN). Specifically, k Wi-Fi fingerprints closest to the Wi-Fi list and corresponding similarities are first found. Finally, a similarity of a POI to which the k Wi-Fi fingerprints belong is determined based on the k Wi-Fi fingerprints and the respective similarities.

For example, in the foregoing WKNN algorithm, k=5, and the POI fingerprint is shown in Table 3. Four Wi-Fi fingerprints closest to the Wi-Fi list and corresponding similarities are found. Finally, a similarity of a POI to which the four Wi-Fi fingerprints belong is determined based on the four Wi-Fi fingerprints. It is assumed that in the four Wi-Fi fingerprints, three Wi-Fi fingerprints belong to the store B, and one Wi-Fi fingerprint belongs to the store A. For example, the store B may be determined as the target POI based on the quantity. For another example, the target POI or the like may be determined based on a similarity value of a specific fingerprint of a POI. A specific manner of determining, based on the k Wi-Fi fingerprints, the similarity of the POI to which the k Wi-Fi fingerprints belong is not limited.

The preset condition is related to a similarity value. For example, the preset condition is that the similarity is greater than or equal to a first preset threshold. For another example, the preset condition is that the similarity is less than or equal to a second preset threshold. This is not specifically limited herein. In addition, the similarity may be calculated in a plurality of manners, and may be a Euclidean distance, a cosine similarity, or the like. This is not specifically limited herein.

Step 206: The cloud device sends the target POI to the terminal device.

After determining the target POI, the cloud device sends the target POI to the terminal device. Correspondingly, the terminal device receives the target POI sent by the cloud device.

Optionally, after obtaining the target POI, the terminal device recommends a service related to the target POI to a user. For example, the service may be a service of the target POI, or may be a service of a POI near the target POI, to improve user experience. The service may include map navigation, travel, a business service, geographical analysis, and the like.

For example, it is assumed that the target POI is the store A. In this case, a service related to the store A may be recommended to the user, for example, a recommended package, a group buying coupon, or a coupon of the store A.

In this embodiment of this application, a terminal performs pre-identification, and then, cloud performs accurate identification. This can not only improve accuracy of POI identification, but also reduce computing load of the cloud.

Further, to reduce overall power consumption, a plurality of interception mechanisms may be set, to avoid most invalid requests. The following provides detailed descriptions.

First interception mechanism:

In the first interception mechanism, a first preset condition is set for step 204 in the embodiment shown in FIG. 2. In other words, step 204 is triggered only if the first preset condition is met.

This case may also be understood as determining, based on the first preset condition, whether it is necessary to perform accurate POI identification.

The first preset condition in this embodiment of this application includes at least one of the following:

1. A movement distance of the terminal device is greater than or equal to a first threshold, where the movement distance is a distance between a location of the terminal device at which the terminal device sends a request to the cloud device last time and a current location of the terminal device. Alternatively, it is understood that, when the movement distance of the terminal device is small, because a change of a surrounding POI is small, it is unnecessary to perform accurate identification and update the target POI.

2. A difference between the Wi-Fi list obtained in step 202 and a previously obtained Wi-Fi list is greater than or equal to a second threshold. Alternatively, it is understood that, when the Wi-Fi list does not change greatly, strength of each Wi-Fi does not change, it is unnecessary to perform accurate identification and update the target POI.

3. A conclusion is obtained through neural network analysis, where the conclusion is sending the first request. Alternatively, it is understood that features such as a POI candidate set similarity, an estimated offset, a Wi-Fi similarity, and a time interval between data pairs may be calculated based on the data pairs of identification results of two times of POI identification. If the two identification results are consistent (for example, whether a significant location change occurs), data is marked as a positive sample (an invalid request that needs to be intercepted). If the two identification results are inconsistent, data is marked as a negative sample (a valid request that does not need to be intercepted). A neural network that can determine whether to intercept a current request is trained based on the constructed data. In this way, the neural network can be used subsequently to determine, through analysis, whether to send the first request or not, or whether the significant location change occurs.

4. The terminal device is not at a preset location, where the preset location includes at least one of the following: a home, a company, and the like. Alternatively, it is understood that when the user is at home or in the company, there is a low probability of obtaining a Wi-Fi of a surrounding POI through scanning, to trigger a subsequent accurate identification procedure. When it is determined that the user is at home or in the company, it is unnecessary to initiate accurate POI identification. Whether the user is at home or in the company may be determined based on a connected Wi-Fi or a Wi-Fi fingerprint obtained through scanning.

Second interception mechanism:

In the first interception mechanism, a preset condition is set for step 203 in the embodiment shown in FIG. 2. In other words, step 203 is triggered only if a second preset condition is met.

The second preset condition in this embodiment of this application includes at least one of the following:

1. The terminal device is not at a preset location, where the preset location includes at least one of the following: a home, a company, and the like. Alternatively, it is understood that when the user is at home or in the company, there is a low probability of obtaining a Wi-Fi of a surrounding POI through scanning, to trigger a subsequent identification procedure. When it is determined that the user is at home or in the company, it is unnecessary to initiate POI pre-identification on a device side (therefore accurate POI identification is not initiated). Whether the user is at home or in the company may be determined based on a connected Wi-Fi or a Wi-Fi fingerprint obtained through scanning.

2. The cloud device learns business hours of each POI, and delivers the business hours as a feature to the terminal device. Therefore, the terminal device performs interception during the business hours before performing preliminary identification, for example, performs interception during non-business hours.

It may be understood that the foregoing several cases of the first preset condition and the second preset condition are merely examples. In actual application, there may be another case. This is not specifically limited herein.

In this embodiment of this application, the plurality of interception mechanisms are set, to avoid the most invalid requests, thereby reducing overall power consumption.

The following describes how the terminal device obtains the POI feature of the first area in the manner of receiving the POI feature sent by the cloud device in step 201.

Refer to FIG. 3. The process includes step 301 to step 303. The following describes step 301 to step 303 in detail.

Step 301: The terminal device sends a second request to the cloud device.

The terminal device sends the second request to the cloud device. Correspondingly, the cloud device receives the second request sent by the terminal device, where the second request is used to request the POI feature of the first area, and the POI feature includes a POI identifier, a first BSSDI corresponding to the POI identifier, and related information of the first BSSID.

The related information includes a statistical value of the first BSSID, the statistical value includes at least a maximum value and a minimum value, and the statistical value is used to measure strength information of the first BSSID.

Optionally, the second request may further indicate a POI type. For the POI type, refer to the description in step 205 in the embodiment shown in FIG. 2. Details are not described herein again.

Step 302: The cloud device determines the POI feature in a feature library based on the first area.

The cloud device first obtains the feature library, where the feature library includes a BSSID whose parameter is greater than a threshold in each POI, a corresponding statistical value, geographic information (for example, city information, a longitude, a latitude, and an address) of the POI, and the like. The parameter includes a frequency and/or strength.

In this embodiment of this application, the cloud device obtains the feature library in a plurality of manners. The feature library may be stored in advance, or may be extracted from a database, or may be sent by another device. This is not specifically limited herein.

Optionally, the feature library may further include related information of each POI, and the related information includes at least one of the following: a POI name, a POI type, and the like.

After receiving the second request sent by the terminal device, the cloud device may determine the POI feature in the feature library based on the first area. Specifically, the POI feature of the first area is obtained by matching the first area with the geographic information of each POI in the feature library.

Further, if the feature library includes the POI type, and the second request further indicates the POI type, a type of a POI corresponding to the POI feature determined by the cloud device meets the POI type indicated by the second request.

Step 303: The cloud device sends the POI feature to the terminal device.

After determining the POI feature of the first area, the cloud device sends the POI feature to the terminal device. Correspondingly, the terminal device receives the POI feature sent by the cloud device. In this way, the terminal device can perform POI pre-identification based on the POI feature. For details, refer to step 203 in the embodiment shown in FIG. 2. Details are not described herein again.

It may be understood that FIG. 3 describes only one case of step 201 in the embodiment shown in FIG. 2. In actual application, step 201 may be performed in another manner. This is not specifically limited herein.

In this embodiment of this application, the cloud device provides, for the terminal device by receiving the second request of the terminal device, the BSSID whose parameter is greater than the threshold and related information of the BSSID, so that the terminal device can perform POI pre-identification.

In addition, an embodiment of this application further provides another data processing method. In the method, a terminal device may collect a data packet in a movement process and/or a process of participating in onsite interaction behavior, and report the data packet to a cloud device. In this way, the cloud device can generate a database based on data packets reported by a plurality of terminal devices, to facilitate subsequent accurate POI identification based on a user request. In this method, the database used for POI identification can be generated without onsite collection of specific technical personnel, thereby improving database generation efficiency.

FIG. 4 is another schematic flowchart of a data processing method according to an embodiment of this application. The method may include step 401 to step 404. The following describes step 401 to step 404 in detail.

Step 401: A terminal device collects data.

The terminal device collects the data in a plurality of manners. The data may include at least one of the following: Wi-Fi information (or referred to as track crowdsourcing data) collected by the terminal device in a movement process, information (or referred to as behavior crowdsourcing data) collected by the terminal device in a process of participating in onsite interaction behavior (payment, code scanning, or NFC), and the like.

The Wi-Fi information may also be understood as a Wi-Fi fingerprint, and the Wi-Fi fingerprint includes a Wi-Fi identifier and a statistical value of strength corresponding to the Wi-Fi identifier. The onsite interaction behavior in which the terminal device participates may include at least one of the following: payment, code scanning, near field communication (near field communication, NFC), Bluetooth, and the like.

Optionally, the terminal device collects the Wi-Fi information in the movement process. For example, the terminal device is located in a specific area (for example, a shopping mall, an airport, or an entertainment facility), and collects the Wi-Fi information at intervals. Certainly, data or the like of a base station to which the terminal device belongs may also be collected.

Optionally, the terminal device collects data in the process of participating in the onsite interaction behavior. For example, when a user uses the terminal device to pay in a store, related information (for example, including at least one of the following: a store name, information about a street on which the store is located, a store Wi-Fi, the data of the base station to which the terminal device belongs, a store category, and a brand name) of the store may be collected through a payment interface. For another example, when the user uses the terminal device to scan a code in a store, related information of the store may be collected through an interface that pops up after the code is scanned.

It may be understood that the foregoing collection process may be triggered under authorization or permission of the user.

Step 402: The terminal device sends a data packet to the cloud device.

After collecting the data, the terminal device sends the data packet to the cloud device. Correspondingly, the cloud device receives the data packet sent by the terminal device. The data packet includes the data collected by the terminal device in step 401. The data packet is used by the cloud device to perform POI identification. For example, the data packet is used to generate a database, and the database is used to determine a target POI.

Optionally, in addition to the data collected by the terminal device in step 401, the data packet may further include longitude and latitude information corresponding to the terminal device in the collection process.

In this embodiment of this application, the data packet may be actively reported by the terminal device, or may be reported by the terminal device according to an instruction delivered by the cloud device. This is not specifically limited herein.

Step 403: The cloud device aggregates at least two data packets to obtain at least two temporary POIs.

After receiving the at least two data packets sent by at least two terminal devices, the cloud device may aggregate the at least two data packets to obtain the at least two temporary POIs.

It may be understood that the behavior crowdsourcing data includes a POI description. However, the track crowdsourcing data may not reflect the POI description, and a Wi-Fi-POI relationship database needs to be introduced to determine the POI description in the track crowdsourcing data. The Wi-Fi-POI relationship database represents a mapping relationship between a Wi-Fi and a POI, and may be pre-stored or manually marked. This is not specifically limited herein.

After obtaining the at least two data packets, the cloud device may determine POI description information related to a Wi-Fi name from the data packets, to obtain intermediate POI data. The intermediate POI data includes geographic information of the POI, description information of the POI, and a Wi-Fi list of the POI.

The cloud device determines geographic information based on at least one of the longitude and latitude information in a case in which the terminal device collects the data or the data of the base station to which the terminal device belongs, and then aggregates data packets based on the geographic information and the Wi-Fi fingerprint to obtain a plurality of temporary POIs.

Optionally, before aggregating the data packets, the cloud device may further first perform data cleaning on the at least two data packets, for example, delete some data that the user does not want to disclose or redundant data, to improve user privacy security or reduce storage consumption. In this case, the cloud device aggregates the cleaned data packets based on the geographic information to obtain the at least two temporary POIs.

The POI description information may be understood as information related to the POI, and may be specifically a store name, street information, a store Wi-Fi, a store category, a brand name, or the like corresponding to the POI.

Optionally, the cloud device may further filter out outliers in an aggregating process. Certainly, maturity evaluation may also be performed on the at least two temporary POIs, and an immature temporary POI is filtered out (for example, a POI whose crowdsourcing indicator is less than a threshold is deleted, where the indicator includes one or more of the following: a clustering indicator, a quantity of samples, and the like).

Step 404: The cloud device associates the at least two temporary POIs with a POI library to obtain a database.

The cloud device obtains the POI library (which may also be referred to as a POI parent library, a map database, or the like). The POI library may be understood as being built by a map vendor. The POI library includes at least two POI identifiers and basic information corresponding to the at least two POI identifiers. The basic information includes at least one of the following: a POI name, information about a street on which the POI is located, a Wi-Fi corresponding to the POI, data of a base station to which the POI belongs, a POI category, a brand name corresponding to the POI, and the like. This step may also be understood as associating the at least two temporary POIs with a POI entity in the POI library through entity linking.

A manner in which the cloud device obtains the POI library may be manual collection, or may be receiving from another device, or may be selecting from the database, or the like. This is not specifically limited herein.

After obtaining the POI library and the at least two temporary POIs, the cloud device associates the at least two temporary POIs with the POI library to obtain the database. A process of generating the database by the cloud device may be a process of creating the database from scratch or a process of updating the database. This is not specifically limited herein.

Optionally, the cloud device performs Wi-Fi fingerprint aggregation on each POI entity in the POI library to obtain the database. The database stores POI information and POI fingerprints, and each POI fingerprint includes at least one Wi-Fi fingerprint. The POI information includes a POI identifier and geographic information, and the POI information further includes at least one of the following: a POI name and a POI type. The at least one Wi-Fi fingerprint includes at least one Wi-Fi, and each Wi-Fi in the at least one Wi-Fi includes a BSSID of the Wi-Fi and strength.

Further, if a temporary POI is not associated with the POI library, it indicates that there is a new POI entity on site or an old POI does not exist. In this case, onsite personnel can be assigned to update store information. Compared with a manner of periodically maintaining a POI library in a conventional technology, this manner can detect a change of the POI entity in time and update the database in time.

Optionally, the cloud device may further extract a feature library from the database, where the feature library includes a BSSID whose parameter is greater than a threshold in each POI, a corresponding statistical value, and geographic information of each POI, the parameter includes a frequency and/or strength, the feature library is used to provide a POI feature for the terminal device, and the POI feature is related to at least one candidate POI.

Alternatively, it is understood that the cloud device extracts a BSSID with a high parameter in each POI, to assist the terminal device in subsequent preliminary POI identification.

In this embodiment of this application, the database is built based on data collected by the terminal device in the movement process or the interaction behavior process instead of adding specific professional collection personnel to collect data on site. In this way, Wi-Fi training can be automatically completed. In addition, new stores or stores that have just closed can be detected in time.

It may be understood that the embodiments shown in FIG. 2 to FIG. 4 may be combined with each other. For example, the embodiment shown in FIG. 2 may be combined with the embodiment shown in FIG. 3. For another example, the embodiment shown in FIG. 2 may be combined with the embodiment shown in FIG. 4. For another example, the embodiment shown in FIG. 2 may be combined with the embodiments shown in FIG. 3 and FIG. 4. This is not specifically limited herein.

The foregoing describes the data processing method in embodiments of this application. The following describes related devices in embodiments of this application. Refer to FIG. 5. An embodiment of a terminal device in embodiments of this application includes an obtaining unit 501 and a transceiver unit 502.

The obtaining unit 501 is configured to obtain a point of interest POI feature of a first area, where the POI feature includes a POI identifier, a first basic service set identifier BSSID corresponding to the POI identifier, and related information of the first BSSID.

The obtaining unit 501 is further configured to obtain a wireless fidelity Wi-Fi list, where the Wi-Fi list includes at least one Wi-Fi, and each Wi-Fi in the at least one Wi-Fi includes a second BSSID of the Wi-Fi and strength.

The transceiver unit 502 is configured to send a first request to a cloud device, where the first request carries at least one candidate POI and the Wi-Fi list, and the at least one candidate POI is related to the POI feature and the Wi-Fi list.

The transceiver unit 502 is further configured to receive a target POI sent by the cloud device, where the target POI belongs to the at least one candidate POI.

Optionally, that the at least one candidate POI is related to the POI feature and the Wi-Fi list includes: The at least one candidate POI is a POI that is in the POI feature and whose POI confidence is greater than or equal to a preset threshold, and the POI confidence indicates a degree of matching between the POI feature and the Wi-Fi list.

Optionally, the obtaining unit 501 is specifically configured to send a second request to the cloud device, where the second request is used to request the POI feature of the first area. The obtaining unit 501 is specifically configured to receive the POI feature sent by the cloud device.

Optionally, the obtaining unit 501 is specifically configured to send the first request to the cloud device if a preset condition is met.

The preset condition includes at least one of the following:

a movement distance of the terminal device is greater than or equal to a first threshold, where the movement distance is a distance between a location of the terminal device at which the terminal device sends a request to the cloud device last time and a current location of the terminal device;

a difference between the Wi-Fi list and a previously obtained Wi-Fi list is greater than or equal to a second threshold; and

a conclusion is obtained through neural network analysis, where the conclusion is sending the first request.

Optionally, the related information includes a statistical value of the first BSSID, the statistical value includes at least a maximum value and a minimum value, and the statistical value is used to measure strength information of the first BSSID.

Optionally, the terminal device further includes a recommendation unit 503, configured to recommend a related service based on the target POI.

Optionally, the terminal device further includes a collection unit 504, configured to collect at least one data packet, where each data packet in the at least one data packet includes Wi-Fi information collected by the terminal device in a movement process and/or information collected by the terminal device when the terminal device participates in onsite interaction behavior. The transceiver unit 502 is further configured to send the at least one data packet to the cloud device, where the at least one data packet is used by the cloud device to generate a database, and the database is used to determine the target POI.

In this embodiment, operations performed by units in the terminal device are similar to those described in the embodiments shown in FIG. 1 to FIG. 4. Details are not described herein again.

In this embodiment, compared with a solution in which POI identification is entirely processed by cloud in a conventional technology, this application in which a terminal performs pre-identification, and then, cloud performs accurate identification can not only improve accuracy of POI identification, but also reduce computing load of the cloud. In addition, POI identification can be completed based on one round of Wi-Fi list scanning. Compared with the conventional technology in which multiple consecutive rounds of Wi-Fi scanning are performed, this application can reduce an overall identification delay.

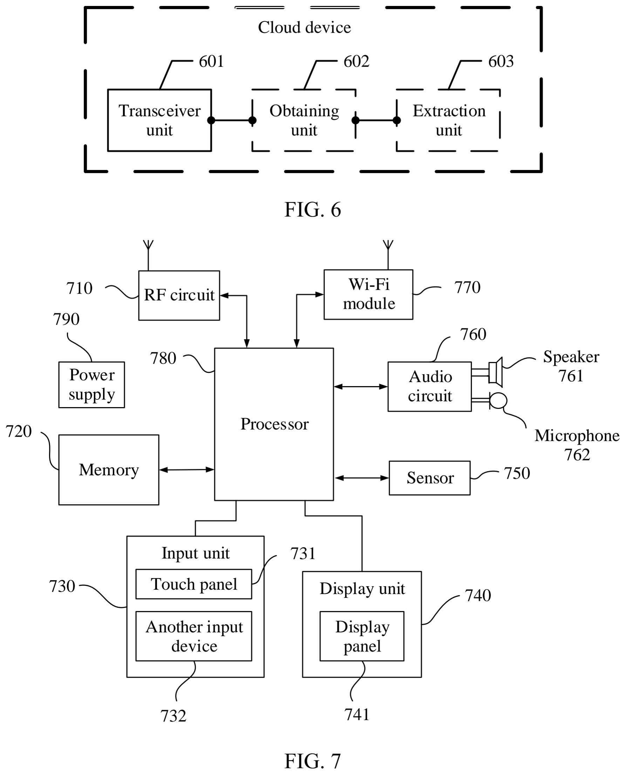

Refer to FIG. 6. An embodiment of a cloud device in embodiments of this application includes:
a transceiver unit 601, configured to receive a first request from a terminal device, where the first request carries at least one candidate POI and a Wi-Fi list, the Wi-Fi list includes at least one Wi-Fi, and each Wi-Fi in the at least one Wi-Fi includes a second BSSID of the Wi-Fi and strength.

The transceiver unit 601 is further configured to send a target POI to the terminal device, where the target POI is related to a database, at least one candidate POI, and the Wi-Fi list, the database stores POI information and a POI fingerprint, and each POI fingerprint includes at least one Wi-Fi fingerprint.

Optionally, the cloud device further includes an obtaining unit 602, configured to obtain the database, where the POI information includes a POI identifier and geographic information, the POI information further includes at least one of a name and a POI type, the at least one Wi-Fi fingerprint includes at least one Wi-Fi, and each Wi-Fi in the at least one Wi-Fi includes a BSSID of the Wi-Fi and strength.

Optionally, the obtaining unit 602 is specifically configured to receive at least one data packet reported by at least one terminal device, where each data packet in the at least one data packet includes Wi-Fi information collected by a corresponding terminal device in a movement process and/or information collected by the terminal device when the terminal device participates in onsite interaction behavior. The obtaining unit 602 is specifically configured to aggregate at least two data packets to obtain at least two temporary POIs. The obtaining unit 602 is specifically configured to associate the at least two temporary POIs with a POI library to obtain the database, where the POI library includes at least two POI identifiers and basic information corresponding to the at least two POI identifiers.

Optionally, the cloud device further includes an extraction unit 603, configured to extract a feature library from the database, where the feature library includes a BSSID whose parameter is greater than a threshold in each POI, a corresponding statistical value, and geographic information of each POI, the parameter includes a frequency and/or strength, the feature library is used to provide a POI feature for the terminal device, and the POI feature is related to the at least one candidate POI.

Optionally, the transceiver unit 601 is further configured to receive a second request from the terminal device, where the second request is used to request a POI feature of a first area, and the POI feature includes a POI identifier, a first basic service set identifier BSSID corresponding to the POI identifier, and related information of the first BSSID. The transceiver unit 601 is further configured to determine the POI feature in the feature library based on the first area. The transceiver unit 601 is further configured to send the POI feature to the terminal device.

Optionally, that the target POI is related to the database, the at least one candidate POI, and the Wi-Fi list includes: The database is used to determine a POI fingerprint related to the at least one candidate POI, and a similarity between each Wi-Fi fingerprint in the POI fingerprint and each Wi-Fi in the Wi-Fi list is related to the target POI.

In this embodiment, operations performed by units in the cloud device are similar to those described in the embodiments shown in FIG. 1 to FIG. 4. Details are not described herein again.

In this embodiment, compared with a solution in which POI identification is entirely processed by cloud in a conventional technology, this application in which a terminal performs pre-identification, and then, cloud performs accurate identification can not only improve accuracy of POI identification, but also reduce computing load of the cloud. In addition, POI identification can be completed based on one round of Wi-Fi list scanning. Compared with the conventional technology in which multiple consecutive rounds of Wi-Fi scanning are performed, this application can reduce an overall identification delay.

Refer to FIG. 7. An embodiment of this application provides another terminal device. For ease of description, only a part related to this embodiment of this application is described. For specific technical details that are not disclosed, refer to the method part in embodiments of this application. The terminal device may be any terminal device including a mobile phone, a tablet computer, a personal digital assistant (personal digital assistant, PDA), a point of sales (point of sales, POS) device, a vehicle-mounted computer, or the like. For example, the terminal device is a mobile phone.

FIG. 7 is a block diagram of a partial structure of a mobile phone related to the terminal device according to this embodiment of this application. As shown in FIG. 7, the mobile phone includes components such as a radio frequency (radio frequency, RF) circuit 710, a memory 720, an input unit 730, a display unit 740, a sensor 750, an audio circuit 760, a wireless fidelity (wireless fidelity, Wi-Fi) module 770, a processor 780, and a power supply 790. A person skilled in the art may understand that a structure of the mobile phone shown in FIG. 7 constitutes no limitation on the mobile phone. The mobile phone may include more or fewer components than those shown in the figure, may combine some components, or may have different component arrangements.

The following specifically describes the components of the mobile phone with reference to FIG. 7.

The RF circuit 710 may be configured to receive and send signals in an information receiving/sending process or a call process, in particular, after receiving downlink information of a base station, send the downlink information to the processor 780 for processing; and in addition, send designed uplink data to the base station. Generally, the RF circuit 710 includes but is not limited to an antenna, at least one amplifier, a transceiver, a coupler, a low noise amplifier (low noise amplifier, LNA), and a duplexer. In addition, the RF circuit 710 may further communicate with a network and another device through wireless communication. The foregoing wireless communication may use any communication standard or protocol, including but not limited to a global system for mobile communications (global system of mobile communication, GSM), a general packet radio service (general packet radio service, GPRS), code division multiple access (code division multiple access, CDMA), wideband code division multiple access (wideband code division multiple access, WCDMA), long term evolution (long term evolution, LTE), an email, and a short messaging service (short messaging service, SMS).

The memory 720 may be configured to store a software program and a module. The processor 780 runs the software program and the module that are stored in the memory 720, to perform various functional applications and data processing of the mobile phone. The memory 720 may mainly include a program storage area and a data storage area. The program storage area may store an operating system, an application required by at least one function (such as a sound playing function or an image display function), and the like. The data storage area may store data (such as audio data and an address book) created based on use of the mobile phone, and the like. In addition, the memory 720 may include a high-speed random access memory, and may further include a nonvolatile memory, for example, at least one magnetic disk storage device, a flash memory, or another volatile solid-state storage device.

The input unit 730 may be configured to: receive input digital or character information, and generate a key signal input related to user setting and function control of the mobile phone. Specifically, the input unit 730 may include a touch panel 731 and another input device 732. The touch panel 731, also referred to as a touchscreen, may collect a touch operation of a user on or near the touch panel (for example, an operation of a user on the touch panel 731 or near the touch panel 731 by using any suitable object or accessory like a finger or a stylus), and drive a corresponding connection apparatus based on a preset program. Optionally, the touch panel 731 may include two parts: a touch detection apparatus and a touch controller. The touch detection apparatus detects a touch orientation of the user, detects a signal brought by the touch operation, and transfers the signal to the touch controller. The touch controller receives touch information from the touch detection apparatus, converts the touch information into touch point coordinates, sends the touch point coordinates to the processor 780, and can receive and execute a command sent by the processor 780. In addition, the touch panel 731 may be implemented in a plurality of types, such as a resistive type, a capacitive type, an infrared type, and a surface acoustic wave type. In addition to the touch panel 731, the input unit 730 may further include the another input device 732. Specifically, the another input device 732 may include but is not limited to one or more of a physical keyboard, a functional key (for example, a volume control key or an on/off key), a trackball, a mouse, or a joystick.

The display unit 740 may be configured to display information input by the user or information provided for the user, and various menus of the mobile phone. The display unit 740 may include a display panel 741. Optionally, the display panel 741 may be configured in a form like a liquid crystal display (liquid crystal display, LCD) or an organic light-emitting diode (organic light-emitting diode, OLED). Further, the touch panel 731 may cover the display panel 741. After detecting a touch operation on or near the touch panel, the touch panel 731 transfers the touch operation to the processor 780 to determine a type of a touch event, and then, the processor 780 provides a corresponding visual output on the display panel 741 based on the type of the touch event. In FIG. 7, the touch panel 731 and the display panel 741 are used as two independent components to implement input and output functions of the mobile phone. However, in some embodiments, the touch panel 731 and the display panel 741 may be integrated to implement the input and output functions of the mobile phone.

The mobile phone may further include at least one sensor 750 like an optical sensor, a motion sensor, and another sensor. Specifically, the light sensor may include an ambient light sensor and a proximity sensor. The ambient light sensor may adjust luminance of the display panel 741 based on brightness of ambient light. The proximity sensor may turn off the display panel 741 and/or backlight when the mobile phone is moved to an ear. As a type of movement sensor, an accelerometer sensor may detect a value of acceleration in each direction (usually on three axes), may detect a value and a direction of gravity in a stationary state, and may be used in an application for identifying a mobile phone posture (such as screen switching between a landscape mode and a portrait mode, a related game, or magnetometer posture calibration), a function related to vibration identification (such as a pedometer or a knock), or the like. Another sensor like a gyroscope, a barometer, a hygrometer, a thermometer, or an infrared sensor may be further disposed on the mobile phone. Details are not described herein.

The audio circuit 760, a speaker 761, and a microphone 762 may provide audio interfaces between the user and the mobile phone. The audio circuit 760 may convert received audio data into an electrical signal and transmit the electrical signal to the speaker 761. The speaker 761 converts the electrical signal into a sound signal for output. In addition, the microphone 762 converts a collected sound signal into an electrical signal. The audio circuit 760 receives the electrical signal, converts the electrical signal into audio data, and outputs the audio data to the processor 780 for processing; and then, the audio data is sent to, for example, another mobile phone through the RF circuit 710, or the audio data is output to the memory 720 for further processing.

A Wi-Fi belongs to a short-distance wireless transmission technology. The mobile phone may help, via a Wi-Fi module 770, the user receive and send an email, browse a web page, access streaming media, and the like, which provides wireless broadband internet access for the user. Although FIG. 7 shows the Wi-Fi module 770, it may be understood that the Wi-Fi module 770 is not a mandatory component of the mobile phone.

The processor 780 is a control center of the mobile phone, connects all parts of the mobile phone through various interfaces and lines, and performs various functions of the mobile phone and processes data by running or executing the software program and/or module stored in the memory 720 and invoking data stored in the memory 720, to perform overall monitoring on the mobile phone. Optionally, the processor 780 may include one or more processing units. Preferably, the processor 780 may integrate an application processor and a modem processor. The application processor mainly processes an operating system, a user interface, an application, and the like. The modem processor mainly processes wireless communication. It may be understood that the modem processor may alternatively not be integrated into the processor 780.

The mobile phone further includes the power supply 790 (such as a battery) that supplies power to each component. Preferably, the power supply may be logically connected to the processor 780 by using a power management system, to implement functions such as management of charging, discharging, and power consumption by using the power management system.

Although not shown, the mobile phone may further include a camera, a Bluetooth module, and the like. Details are not described herein.

In this embodiment of this application, the processor 780 included in the terminal device may perform functions in the embodiments shown in FIG. 1 to FIG. 4. Details are not described herein again.

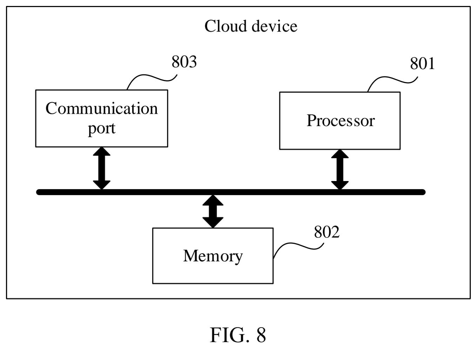

FIG. 8 is a diagram of a structure of another cloud device according to an embodiment of this application. The cloud device may include a processor 801, a memory 802, and a communication port 803. The processor 801, the memory 802, and the communication port 803 are interconnected through a line. The memory 802 stores program instructions and data.

The memory 802 stores program instructions and data that correspond to steps performed by the cloud device in the corresponding implementations shown in FIG. 1 to FIG. 4, for example, stores a database.

The processor 801 is configured to perform a step performed by the cloud device in any one of the embodiments shown in FIG. 1 to FIG. 4.

The communication port 803 may be configured to receive and send data, and is configured to perform steps related to obtaining, sending, and receiving in any one of the embodiments shown in FIG. 1 to FIG. 4.

In an implementation, the cloud device may include more or fewer components than those shown in FIG. 8. This is merely an example for description, and is not limited in this application.

An embodiment of this application further provides a computer-readable storage medium. The storage medium is configured to store one or more computer-executable instructions. When the computer-executable instructions are executed by a processor, the processor performs the method in the possible implementations of the terminal device or the cloud device in the foregoing embodiments.

An embodiment of this application further provides a computer program product (or referred to as a computer program). When the computer program product is executed by a processor, the processor performs the method in the possible implementations of the terminal device or the cloud device.

An embodiment of this application further provides a chip system. The chip system includes at least one processor, configured to support a communication apparatus in implementing a function in the foregoing possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the terminal device or the cloud device in the foregoing method embodiments.

An embodiment of this application further provides a communication system. The communication system includes the terminal device and the cloud device in any one of the foregoing embodiments.

In the several embodiments provided in this application, it should be understood that the disclosed system, apparatus, and method may be implemented in another manner. For example, the described apparatus embodiments are merely examples. For example, division into the units is merely logic function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit. All or some of the integrated units may be implemented by software, hardware, firmware, or any combination thereof.

When software is used to implement the integrated units, all or some of the integrated units may be implemented in a form of a computer program product. The computer program product includes one or more computer instructions. When the computer program instructions are loaded and executed on a computer, the procedures or functions according to embodiments of the present invention are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like.

In this specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, and this is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

**Claims**

1. A data processing method, wherein the method is applied to a terminal device, and the method comprises:

   obtaining a point of interest POI feature of a first area, wherein the POI feature comprises a POI identifier, a first basic service set identifier BSSID corresponding to the POI identifier, and related information of the first BSSID;
   obtaining a wireless fidelity Wi-Fi list, wherein the Wi-Fi list comprises at least one Wi-Fi, and each Wi-Fi in the at least one Wi-Fi comprises a second BSSID of the Wi-Fi and strength;
   sending a first request to a cloud device, wherein the first request carries at least one candidate POI and the Wi-Fi list, and the at least one candidate POI is related to the POI feature and the Wi-Fi list; and
   receiving a target POI sent by the cloud device, wherein the target POI belongs to the at least one candidate POI.

2. The method according to claim 1, wherein that the at least one candidate POI is related to the POI feature and the Wi-Fi list comprises: the at least one candidate POI is a POI that is in the POI feature and whose POI confidence is greater than or equal to a preset threshold, and the POI confidence indicates a degree of matching between the POI feature and the Wi-Fi list.

3. The method according to claim 1 or 2, wherein obtaining the point of interest POI feature of the first area comprises:

   sending a second request to the cloud device, wherein the second request is used to request the POI feature of the first area; and
   receiving the POI feature sent by the cloud device.

4. The method according to any one of claims 1 to 3, wherein sending the first request to the cloud device comprises:

   sending the first request to the cloud device if a preset condition is met, wherein

the preset condition comprises at least one of the following:

a movement distance of the terminal device is greater than or equal to a first threshold, wherein the movement distance is a distance between a location of the terminal device at which the terminal device sends a request to the cloud device last time and a current location of the terminal device;
a difference between the Wi-Fi list and a previously obtained Wi-Fi list is greater than or equal to a second threshold; and
a conclusion is obtained through neural network analysis, wherein the conclusion is sending the first request.

5. The method according to any one of claims 1 to 4, wherein the related information comprises a statistical value of the first BSSID, the statistical value comprises at least a maximum value and a minimum value, and the statistical value is used to measure strength information of the first BSSID.

6. The method according to any one of claims 1 to 5, wherein the method further comprises: recommending a related service based on the target POI.

7. The method according to any one of claims 1 to 6, wherein the method further comprises:

collecting at least one data packet, wherein each data packet in the at least one data packet comprises Wi-Fi information collected by the terminal device in a movement process and/or information collected by the terminal device when the terminal device participates in onsite interaction behavior; and
sending the at least one data packet to the cloud device, wherein the at least one data packet is used by the cloud device to generate a database, and the database is used to determine the target POI.

8. A data processing method, wherein the method is applied to a cloud device, and the method comprises:

receiving a first request from a terminal device, wherein the first request carries at least one candidate POI and a Wi-Fi list, the Wi-Fi list comprises at least one Wi-Fi, and each Wi-Fi in the at least one Wi-Fi comprises a second BSSID of the Wi-Fi and strength; and
sending a target POI to the terminal device, wherein the target POI is related to a database, the at least one candidate POI, and the Wi-Fi list, the database stores POI information and a POI fingerprint, and each POI fingerprint comprises at least one Wi-Fi fingerprint.

9. The method according to claim 8, wherein before receiving the first request from the terminal device, the method further comprises:
obtaining the database, wherein the POI information comprises a POI identifier and geographic information, the POI information further comprises at least one of a name and a POI type, the at least one Wi-Fi fingerprint comprises at least one Wi-Fi, and each Wi-Fi in the at least one Wi-Fi comprises a BSSID of the Wi-Fi and strength.

10. The method according to claim 9, wherein obtaining the database comprises:

receiving at least one data packet reported by at least one terminal device, wherein each data packet in the at least one data packet comprises Wi-Fi information collected by a corresponding terminal device in a movement process and/or information collected by the terminal device when the terminal device participates in onsite interaction behavior;
aggregating at least two data packets to obtain at least two temporary POIs; and
associating the at least two temporary POIs with a POI library to obtain the database, wherein the POI library comprises at least two POI identifiers and basic information corresponding to the at least two POI identifiers.

11. The method according to any one of claims 8 to 10, wherein the method further comprises:
extracting a feature library from the database, wherein the feature library comprises a BSSID whose parameter is greater than a threshold in each POI, a corresponding statistical value, and geographic information of each POI, the parameter comprises a frequency and/or strength, the feature library is used to provide a POI feature for the terminal device, and the POI feature is related to the at least one candidate POI.

12. The method according to claim 11, wherein before receiving the first request from the terminal device, the method further comprises:

receiving a second request from the terminal device, wherein the second request is used to request a POI feature of a first area, and the POI feature comprises a POI identifier, a first basic service set identifier BSSID corresponding to the POI identifier, and related information of the first BSSID;

determining the POI feature in the feature library based on the first area; and

sending the POI feature to the terminal device.

13. The method according to any one of claims 8 to 12, wherein that the target POI is related to the database, the at least one candidate POI, and the Wi-Fi list comprises: the database is used to determine a POI fingerprint related to the at least one candidate POI, and a similarity between each Wi-Fi fingerprint in the POI fingerprint and each Wi-Fi in the Wi-Fi list is related to the target POI.

14. A terminal device, wherein the terminal device comprises:

an obtaining unit, configured to obtain a point of interest POI feature of a first area, wherein the POI feature comprises a POI identifier, a first basic service set identifier BSSID corresponding to the POI identifier, and related information of the first BSSID; and

the obtaining unit is further configured to obtain a wireless fidelity Wi-Fi list, wherein the Wi-Fi list comprises at least one Wi-Fi, and each Wi-Fi in the at least one Wi-Fi comprises a second BSSID of the Wi-Fi and strength; and

a transceiver unit, configured to send a first request to a cloud device, wherein the first request carries at least one candidate POI and the Wi-Fi list, and the at least one candidate POI is related to the POI feature and the Wi-Fi list; and

the transceiver unit is further configured to receive a target POI sent by the cloud device, wherein the target POI belongs to the at least one candidate POI.

15. The device according to claim 14, wherein that the at least one candidate POI is related to the POI feature and the Wi-Fi list comprises: the at least one candidate POI is a POI that is in the POI feature and whose POI confidence is greater than or equal to a preset threshold, the POI confidence is related to a difference, and the difference is a difference between related information of the first BSSID and strength of the second BSSID in the Wi-Fi list.

16. The device according to claim 14 or 15, wherein the obtaining unit is specifically configured to send a second request to the cloud device, wherein the second request is used to request the POI feature of the first area; and

the obtaining unit is specifically configured to receive the POI feature sent by the cloud device.

17. The device according to any one of claims 14 to 16, wherein the obtaining unit is specifically configured to send the first request to the cloud device if a preset condition is met, wherein

the preset condition comprises at least one of the following:

a movement distance of the terminal device is greater than or equal to a first threshold, wherein the movement distance is a distance between a location of the terminal device at which the terminal device sends a request to the cloud device last time and a current location of the terminal device;

a difference between the Wi-Fi list and a previously obtained Wi-Fi list is greater than or equal to a second threshold; and

a conclusion is obtained through neural network analysis, wherein the conclusion is sending the first request.

18. The device according to any one of claims 14 to 17, wherein the related information comprises a statistical value of the first BSSID, the statistical value comprises at least a maximum value and a minimum value, and the statistical value is used to measure strength information of the first BSSID.

19. The device according to any one of claims 14 to 18, wherein the terminal device further comprises:

a recommendation unit, configured to recommend a related service based on the target POI.

20. The device according to any one of claims 14 to 19, wherein the terminal device further comprises:

a collection unit, configured to collect at least one data packet, wherein each data packet in the at least one data packet comprises Wi-Fi information collected by the terminal device in a movement process and/or information collected by the terminal device when the terminal device participates in onsite interaction behavior; and

the transceiver unit is further configured to send the at least one data packet to the cloud device, wherein the at least one data packet is used by the cloud device to generate a database, and the database is used to determine the target POI.

21. A cloud device, wherein the cloud device comprises:

a transceiver unit, configured to receive a first request from a terminal device, wherein the first request carries at least one candidate POI and a Wi-Fi list, the Wi-Fi list comprises at least one Wi-Fi, and each Wi-Fi in the at least one Wi-Fi comprises a second BSSID of the Wi-Fi and strength; and
the transceiver unit is further configured to send a target POI to the terminal device, wherein the target POI is related to a database, the at least one candidate POI, and the Wi-Fi list, and the database stores POI information and at least one Wi-Fi fingerprint.

22. The device according to claim 21, wherein the cloud device further comprises:
an obtaining unit, configured to obtain the database, wherein the POI information comprises a POI identifier and geographic information, the POI information further comprises at least one of a name and a POI type, the at least one Wi-Fi fingerprint comprises at least one Wi-Fi, and each Wi-Fi in the at least one Wi-Fi comprises a BSSID of the Wi-Fi and strength.

23. The device according to claim 22, wherein the obtaining unit is specifically configured to receive at least one data packet reported by at least one terminal device, wherein each data packet in the at least one data packet comprises Wi-Fi information collected by a corresponding terminal device in a movement process and/or information collected by the terminal device when the terminal device participates in onsite interaction behavior;

the obtaining unit is specifically configured to aggregate at least two data packets to obtain at least two temporary POIs; and
the obtaining unit is specifically configured to associate the at least two temporary POIs with a POI library to obtain the database, wherein the POI library comprises at least two POI identifiers and basic information corresponding to the at least two POI identifiers.

24. The device according to any one of claims 21 to 23, wherein the cloud device further comprises:
an extraction unit, configured to extract a feature library from the database, wherein the feature library comprises a BSSID whose parameter is greater than a threshold in each POI, a corresponding statistical value, and geographic information of each POI, the parameter comprises a frequency and/or strength, the feature library is used to provide a POI feature for the terminal device, and the POI feature is related to the at least one candidate POI.

25. The device according to claim 24, wherein the transceiver unit is further configured to receive a second request from the terminal device, wherein the second request is used to request a POI feature of a first area, and the POI feature comprises a POI identifier, a first basic service set identifier BSSID corresponding to the POI identifier, and related information of the first BSSID;

the transceiver unit is further configured to determine the POI feature in the feature library based on the first area; and
the transceiver unit is further configured to send the POI feature to the terminal device.

26. The device according to any one of claims 21 to 25, wherein that the target POI is related to the database, the at least one candidate POI, and the Wi-Fi list comprises: the database is used to determine a Wi-Fi fingerprint related to the at least one candidate POI, and a similarity between the Wi-Fi fingerprint and the Wi-Fi list is related to the target POI.

27. A terminal device, comprising at least one processor, wherein the at least one processor is coupled to a memory, and the at least one processor is configured to perform the method according to any one of claims 1 to 7.

28. The terminal device according to claim 27, wherein the terminal device is a chip.

29. A cloud device, comprising at least one processor, wherein the at least one processor is coupled to a memory, and the at least one processor is configured to perform the method according to any one of claims 8 to 13.

30. The cloud device according to claim 29, wherein the cloud device is a chip.

31. A communication system, comprising the terminal device according to claim 27 and the cloud device according to claim 29, or comprising the terminal device according to claim 28 and the cloud device according to claim 30.

32. A readable storage medium, wherein the storage medium stores a computer program or instructions, and when the computer program or the instructions are executed by a communication apparatus, the method according to any one of claims 1 to 13 is implemented.

33. A computer program product, comprising instructions, wherein when the instructions are run on a computer, the computer is enabled to perform the method according to any one of claims 1 to 13.

Terminal device

Wireless network or wired network

Cloud device

FIG. 1

Terminal device

Cloud device

201: Obtain a POI feature of a first area

202: Obtain a Wi-Fi list

203: Determine a candidate POI based on the POI feature and the Wi-Fi list

204: First request

205: Determine a target POI based on a database, the candidate POI, and the Wi-Fi list

206: Target POI

FIG. 2

FIG. 3

FIG. 4

FIG. 5

**Cloud device**

| | | |
|---|---|---|
| Transceiver unit — 601 | Obtaining unit — 602 | Extraction unit — 603 |

**FIG. 6**

RF circuit — 710

Wi-Fi module — 770

Power supply — 790

Processor — 780

Audio circuit — 760

Speaker 761

Microphone 762

Memory — 720

Sensor — 750

Input unit — 731
Touch panel
Another input device — 732

Input unit — 730

Display unit
Display panel — 740

Display unit — 741

**FIG. 7**

FIG. 8

## INTERNATIONAL SEARCH REPORT

| International application No. |
| --- |
| **PCT/CN2024/118509** |

**A. CLASSIFICATION OF SUBJECT MATTER**

H04W48/16(2009.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

DWPI, CNTXT, ENTXTC, ENTXT, CNKI: 兴趣点, 候选, 备选, 目标待选, 强度, 指纹, 预识别, 粗识别, 初步识别, 细识别, 精确识别, 云, 服务器, BSSID, WIFI, WI-FI, POI, server, cloud, fingerprint, strength, candidate, point of interest

**C. DOCUMENTS CONSIDERED TO BE RELEVANT**

| Category* | Citation of document, with indication, where appropriate, of the relevant passages | Relevant to claim No. |
| --- | --- | --- |
| A | CN 109284448 A (GUANGDONG OPPO MOBILE TELECOMMUNICATIONS CORP., LTD.) 29 January 2019 (2019-01-29) description, paragraphs 30-71 | 1-33 |
| A | CN 114915909 A (HANHAI INFORMATION TECHNOLOGY (SHANGHAI) CO., LTD.) 16 August 2022 (2022-08-16) entire document | 1-33 |
| A | CN 112825090 A (TENCENT TECHNOLOGY (SHENZHEN) CO., LTD.) 21 May 2021 (2021-05-21) entire document | 1-33 |
| A | CN 116668576 A (HONOR DEVICE CO., LTD.) 29 August 2023 (2023-08-29) entire document | 1-33 |
| A | US 2019132697 A1 (VERIZON PATENT AND LICENSING INC.) 02 May 2019 (2019-05-02) entire document | 1-33 |

☐ Further documents are listed in the continuation of Box C.    ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **10 December 2024** | **23 December 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/118509**

| Patent document cited in search report | | | Publication date (day/month/year) | Patent family member(s) | | | Publication date (day/month/year) |
|---|---|---|---|---|---|---|---|
| CN | 109284448 | A | 29 January 2019 | None | | | |
| CN | 114915909 | A | 16 August 2022 | None | | | |
| CN | 112825090 | A | 21 May 2021 | None | | | |
| CN | 116668576 | A | 29 August 2023 | None | | | |
| US | 2019132697 | A1 | 02 May 2019 | US | 2020120440 | A1 | 16 April 2020 |

Form PCT/ISA/210 (patent family annex) (July 2022)

**REFERENCES CITED IN THE DESCRIPTION**

**Patent documents cited in the description**

- CN 202311658146